# EUROPEAN PATENT APPLICATION

(11) **EP 0 856 500 A1**
(43) Date of publication of application: **05.08.1998**
(21) Application number: 98200268.5
(22) Date of filing: 29.01.1998
(51) Int. Cl.: C04B 41/48

(54) **Process for repairing cracked slabs**

(30) Priority: 04.02.1997 IT TV970009
(71) Applicant: Toncelli, Dario, 36061 Bassano del Grappa (Vicenza) (IT)
(72) Inventor: Toncelli, Dario, 36061 Bassano del Grappa (Vicenza) (IT)
(74) Representative: Caregaro, Silvio

(57) **Abstract**

A new process is described for repairing slabs of stone material containing cracks, by using suitable unsaturated polyester resin compositions. The new resin compositions used for implementing the invention are also described. A low-boiling solvent is admixed with the unsaturated polyester resin. The evaporation of the solvent increases the viscosity of the resin, preventing it from running.

## Description

The present invention relates to a new process for the impregnation and repair of slabs of stone material, such as marble, granite, travertine or the like.

In the following description, reference will be made to cracked slabs but it should be appreciated that this is only by way of non-limiting example. It is possible to reduce or eliminate macroscopic and microscopic pores in stone matenal in a similar manner. Therefore, in the description which follows and in the Claims, the term "cracks" is intended to mean both cracks, whether through or blind, and pores in the slabs to be repaired.

One of the main disadvantages associated with the production of stone slabs is that they often naturally contain internal lines of fracture. These cracks render the industrial production of slabs very complex and expensive, principally owing to the high probability of breakage and therefore the high level of production waste.

At present, the only solution to the problem is the possibility of repairing the cracked slabs using a process of impregnation with synthetic resins, as described, for example, in Italian patent application no. TV96A000101 of 2nd August 1996.

A treatment of the above type, however, is effective and ensures efficient repair of the cracked material only if the resin penetrates into the cracks, filling them and sealing them. This process must be carried out and completed in a short time in order to guarantee meaningful industrial production. Furthermore, in order to be repairable, a slab of marble or more generally of stone material, must have cracks which, even if they pass through the entire thickness of the slab, nevertheless permit manipulation of the slab as a single piece; in general, therefore, it is possible to repair micro-cracks or macrocracks having widths ranging from a tenth of a millimetre to approximately 3 to 4 millimetres.

However, in the case of badly damaged slabs which have blind cracks and which could easily break into several pieces or fragments as a result of being handled, a preliminary reinforcing treatment is also provided for, for example by the application of a layer of glass fibres or lats impregnated with bonding resin.

The most suitable synthetic resins for this repair process are unsaturated polyester resins, although it is also possible to use other structural resins, such as, for example, epoxy resins or acrylic resins.

In the field of synthetic polymers, it is known that unsaturated polyesters copolymerise with monomers having olefinically unsaturated bonds much more rapidly than they can homopolymense with one another; for this reason, unsaturated polyesters are generally used in the form of mixtures with other reactive monomers. Of those monomers, styrene is the most commonly used today; consequently, the term "unsaturated polyester" refers generally to a combination of an unsaturated polyester alkyd and a styrene monomer, where the term "unsaturated polyester alkyd" in its turn refers to the reaction product of an unsaturated polybasic acid and a polyhydroxylic alcohol.

Styrene is the preferred olefinic monomer for use in the preparation of unsaturated polyesters; it is inexpensive, can form low-viscosity systems when used in amounts of up to 35 - 40% by weight of the polymer and copolymerises rapidly with the unsaturated polyester alkyd both at elevated temperature and at ambient temperature.

The unsaturated polyester alkyd is, however, generally derived from propylene glycol fumarate and/or propylene glycol maleate groups which can, inter alia, be used in admixture; it is also possible to use mixtures containing polyester alkyds having no olefinically unsaturated bonds or containing aromatically unsaturated bonds, such as, for example, propylene glycol phthalate.

The copolymerisation of the unsaturated monomer and the unsaturated polyester alkyd is generally initiated by free radicals (normally produced by the decomposition of peroxides or of azo-compounds), by radiation (generally ultra-violet), or by the energy provided by an electron beam.

The copolymerisation reaction, which, for economic reasons and for processing, is generally catalysed by organic peroxides, leads to the formation of a branched polymer having a three-dimensional structure, which is known as a cross-linked unsaturated polyester resin.

The unsaturated polyester alkyd used in this type of copolymerisation is preferably linear, that is to say, it is obtained by the reaction between a dicarboxylic acid and a dihydroxylic alcohol; when styrene is used as the olefinic monomer, therefore, the copolymerisation reaction involves the addition thereof by means of the double bonds of the unsaturated polyester alkyd as indicated below 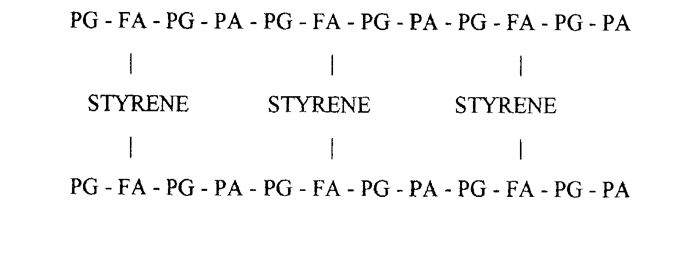 where the unsaturated polyester alkyd in its turn comprises a mixture of propylene glycol fumarate (PG-FA) and propylene glycol phthalate (PG-PA).

However, this does not exclude a priori the use of unsaturated polyester alkyds already having a tendency per se to form cross-linked systems, that is to say, where the polyhydroxylic alcohol has a number of hydroxyl groups greater than the number of carboxylic groups in the respective polyacids. The cross-linking example shown above is, however, only a simplification of what actually takes place in the preparation of cross-linked unsaturated polyester resins; in commercial resins, an amount of styrene greater than the stoichiometric amount is normally used in order to produce a ratio of styrene double bonds to alkyd double bonds greater than 1. Typical multifunctional resins generally have a ratio of styrene double bonds to alkyd double bonds ranging from 2 to 3. This means that, while some of the styrene cross-links with the alkyd chain, the remainder stays attached to the alkyd chain, but without cross-linking taking place between the two polymers, or homopolymerises to form polystyrene chains.

It has also been observed that, in the cross-linking reaction between the unsaturated polyester and the styrene monomer, the liquid resin reaches gel consistency (gel point) when approximately 5% of the original olefinic double bonds of the unsaturated polyester alkyd have reacted with the styrene, while the rigid state, typical of hardened resin, is reached only when 50% of the double bonds have participated in the reaction. Once that percentage has been reached, the cross-linking of the resin continues over time and is regarded as being complete when at least from 90 to 95% of the double bonds have been involved in the reaction.

Therefore, additions of olefinic monomer greater than the stoichiometric amount necessary for the cross-linking reaction constitute merely a further dilution of the unsaturated polyester alkyd in the olefinic monomer, with a consequent reduction in the viscosity of the mixture.

The overdosage of the monomer, which thus acts also as a solvent, therefore enables the viscosity range obtainable with the above-mentioned mixtures to be increased. Consequently, this monomer will be distinguished by being referred to as the reaction solvent in the course of the description.

The synthetic resins in which the olefinic monomer is present in a concentration greater than the stoichiometric amount have, however, a considerable disadvantage which is associated with the high volatility of the olefinic monomer, which renders the system unstable under specific working conditions: the often sudden evaporation of the solvent brings about a reduction in the concentration of the unsaturated polyester alkyd which in turn leads to a rapid increase in the viscosity of the resin, reducing its fluidity and thus limiting its possibilities of use.

A process has now been found, and constitutes one of the subjects of the present invention, for the impregnation and repair of cracked slabs of stone material, preferably marble, granite or travertine, in which an unsaturated polyester resin, which is of the type formed from an unsaturated polyester alkyd and from an olefinic monomer with the addition of a low-boiling solvent, is poured into the cracks of the stone slab and then the slab is maintained at a pressure lower than atmospheric pressure at least until the air has escaped from the cracks, the cracks have been completely filled with resin and the low-boiling solvent has simultaneously evaporated to such an extent that the corresponding increase in the viscosity of the resin prevents it from running, with the consequent at least partial emptying of the through cracks.

It has been found that, by pouring into the cracks of a cracked stone slab a specific amount of unsaturated polyester resin having a viscosity which is controlled and determined in accordance with the type and size of the cracks to be repaired, and by applying a vacuum having a residual pressure value which is a function of the type of solvent and is such as to promote the penetration of the resin into the cracks when the resin is still sufficiently fluid and to permit rapid evaporation of the solvent at the end of the impregnation process, a slab repair is obtained which is surprisingly more efficient than that which can be obtained using other known sealing techniques.

This greater efficiency has been confirmed by fracture tests carried out using standard techniques on specimens of cracked slabs repaired in accordance with the present invention: it was possible to demonstrate not only that the tensile strength is greater than that of the comparison specimens repaired in accordance with the teaching of the already mentioned Italian patent application no. TV96A000101, but also, in fact, that the final fracture of the slab hardly ever occurs in the area of the repaired crack, unlike in the comparison specimens.

The process of the present invention also prevents almost completely the escape of resin from the cracks, thus substantially limiting the subsequent operations of cleaning the slab so repaired.

As mentioned above, the present process involves the evaporation of the solvent at reduced pressures, that is to say, under vacuum.

The viscosity of the resin must also be regulated a priori, with predetermined additions of the low-boiling solvent, calculated as a function of the size of the cracks to be sealed; in particular, it is preferable to use resins having a viscosity of from 100 to 800 cps, preferably from 200 to 600 cps, at a temperature of from 20 to 25°C, for cracks measuring from 0.1 to 1 mm.

The low-boiling solvents used to implement the present invention must in turn have a boiling point of at least 80°C, preferably from 80 to 150°C and even more preferably of 100°C at 760 mmHg. These solvents, which can also be used in admixture, are preferably selected from methyl methacrylate and styrene.

A particularly surprising aspect of the invention is the fact that the loss of the monomeric solvent, and in particular the styrene, by evaporation from the resin system during the hardening stage does not impair cross-linking and therefore the repair of the marble slab. If, after the polyester resin has been poured onto its surface in the area of the cracks, the cracked slab is placed in a chamber where a vacuum is subsequently applied, first of all its macro-cracks and micro-cracks are filled as a result of the withdrawal of the resin which fills the space previously occupied by the air and then, as a result of the evaporation of the monomeric solvent, the resin increases in viscosity and thus undergoes a rapid loss of mobility which enables it to be immobilised inside the cracks. Contrary to expectation, this phenomenon takes place without evaporation of the amount of styrene necessary for a correct and efficient cross-linking of the resin, and instead permits a rapid and complete formation of the cross-links, the resin penetrating more efficiently into the micro-cracks and thus permitting better repair of the cracks.

The action of these low-boiling monomers is even more efficient in the process of the present invention because, on reaching a predetermined degree of vacuum, the solvent boils inside the liquid resin mass, creating an expansion which counteracts effectively the loss of volume in the unsaturated polyester alkyd after cross-linking, thus leaving unchanged, although micro-expanded, the volumetric amount of resin inside the cracks.

Finally, it should be noted that the evaporation of the monomeric solvent involves an acceleration in the rate at which the resin hardens, because it results in a concentration of both the cross-linking catalyst and the starting materials which will in their turn give rise to the formation of the cross-links.

The present invention therefore relates also to the unsaturated polyester resin compositions with the addition of the low-boiling solvent as described above.

The process of the present invention was tested on cracked marble slabs using compositions of polyester resin (the stoichiometric content of which is already approximately 35% of styrene monomer) with and without the addition of low-boiling solvent (as defined above) selected especially from methyl methacrylate monomer and styrene monomer. The results of the tests are set out in the following Table.

### Sealing tests on cracked marble slabs

| Example | 1 | 2 | 3 | 4 |
|---|---|---|---|---|
| crack width | 0.1-0.2 mm | 0.8-1 mm | 0.1-0.2 and 0.8-1 mm | 10.1-0.2 and 0.8-1 mm |
| ambient temperature | 20°C | 20°C | 20°C | 20°C |
| type of resin | polyester | polyester | polyester + 30% methyl methacrylate | polyester + 15% styrene |
| viscosity at 23°C | 600 cps | 600 cps | 100 cps | 250 cps |
| type and % accelerator | Cob6 0.4% | Cob6 0.4% | Cob6 0.4% | Cob6 0.4% |
| type and % catalyst | MEKP/AAP 4% | MEKP/RAP 4% | MEKP/AAP 4% | MEKP/AAP 4% |
| vacuum time | 3' | 3' | 3' | 3' |
| maximum vacuum | 20 mb residual | 20 mb residual | 20 mb residual | 20 mb residual |
| gel time | 10' | 10' | 15' | 10' |
| observations during deaeration | escape of air from the resin | escape of air from the resin | escape of air from the resin and boiling of the methyl methacrylate | escape of air from the resin and boiling of the styrene |
| observations during hardening | poor penetration of the resin | filling of the crack and running of some of the resin from the base | filling of the crack without the resin running from the base | filling of the crack without the resin running from the base |

N.B. All the percentages are by weight.

The test relating to Example 1 shows how, for a crack having a width estimated to be from 0.1 to 0.2 mm, a conventional resin of the polyester type having a viscosity of approximately 600 cps at ambient temperature, accelerated with 0.4% by weight of cobalt promoter and catalysed with 4% by weight of a mixture composed of methyl ketone peroxide and acetyl acetone peroxide, brings about poor penetration of the resin into the crack to be repaired, owing to the high viscosity of the system (which is, however, necessary, in order to prevent the resin from escaping from the base of the cracked slab).

Test 2 shows how a conventional polyester resin, such as that described above and under the same catalysis conditions, when used to repair a crack measuring from 0.8 to 1 mm, is capable of penetrating into the crack despite its high viscosity (600 cps at ambient temperature), but nevertheless escapes from the base because it is not possible further to accelerate the catalysis system once the resin has filled the crack.

Tests 3 and 4, however, show that, when a low-boiling solvent, whether it be styrene or methyl methacrylate monomer (in a concentration which is functional at the final viscosity desired for the system) is admixed with the polyester resin, the resin penetrates both into cracks estimated to be of a size of from 0.1 to 0.2 mm and into cracks estimated to be of a size of from 0.8 to 1 mm, without the resin running and thus escaping from the base, because the system is first of all designed in terms of viscosity as a function of the type of crack to be repaired and is then accelerated by the presence of the vacuum which causes the excess solvent to boil.

Only in this manner, therefore, is it possible fully to repair slabs both containing narrow cracks (for example measuring from 0.1 to 0.2 mm), where the problem is therefore mainly to provide resins having sufficiently low viscosities at ambient temperature to permit penetration into the crack, and containing wide cracks (from 0.8 to 1 mm) where the problem is mainly to maintain the resin inside the crack during the hardening process without its escaping from the base.

All the above must be regarded purely as a non-limiting example of the invention.

## Claims

1. Process for repairing slabs of stone material having cracks, of the type in which an unsaturated polyester resin composition, of the type formed from an unsaturated polyester alkyd and from an olefinic monomer, is poured into the cracks of the stone slab, characterised in that a low-boiling solvent is admixed with the unsaturated polyester resin and in that the slab into the cracks of which the unsaturated polyester resin has been poured is maintained at a pressure lower than atmospheric pressure at least until the air has escaped from the cracks, the cracks have been completely filled with resin and the low-boiling solvent has simultaneously evaporated to such an extent that the corresponding increase in the viscosity of the resin prevents it from running, with the consequent at least partial emptying of the through cracks.

2. Process according to Claim 1, characterised in that the viscosity of the resin is predetermined as a function of the size of the cracks to be sealed by the addition of a suitable amount of the low-boiling solvent.

3. Process according to Claim 2, characterised in that the viscosity of the resin is from 100 to 800 cps at a temperature of from 20 to 25°C, for cracks measuring from 0.1 to 1 mm.

4. Process according to Claim 3, characterised in that the viscosity is from 200 to 600 cps.

5. Process according to Claim 1, wherein the stone material is selected from marble, granite and travertine.

6. Unsaturated polyester resin composition for repairing slabs having cracks according to the process of any one of the preceding Claims, of the type formed from an unsaturated polyester alkyd and from an olefinic monomer, characterised in that a low-boiling solvent is mixed therewith.

7. Composition according to Claim 6, characterised in that the low-boiling solvent has a boiling point higher than 80°C at 760 mmHg.

8. Composition according to Claim 7, characterised in that the boiling point is from 80 to 150°C.

9. Composition according to Claim 8, characterised in that the boiling point is 100°C.

10. Composition according to Claim 6, characterised in that the low-boiling solvent is an olefinic monomer.

11. Composition according to Claim 10, charactensed in that the low-boiling solvent is methyl methacrylate.

12. Composition according to Claim 10, characterised in that the low-boiling solvent is styrene.

13. Composition according to Claim 6, characterised in that the unsaturated polyester alkyd contains units of propylene glycol fumarate and/or propylene glycol maleate.

14. Composition according to Claim 13, characterised in that it also contains units of propylene glycol phthalate.
